# EUROPEAN PATENT APPLICATION

(11) **EP 2 067 400 A1**
(43) Date of publication of application: **10.06.2009**
(21) Application number: 07122163.4
(22) Date of filing: 03.12.2007
(51) Int. Cl.: A01G 5/06

(54) **Method and means for preservation of a cut plant part**

(71) Applicant: Nederlandse Organisatie voor toegepast-natuurwetenschappelijk onderzoek TNO, 2628 VK Delft (NL)
(72) Inventor: Jansen, Albert Edward, 3512 CJ Utrecht (NL)
(74) Representative: Hatzmann, Martin

(57) **Abstract**

Method for lengthening the durability or maintaining the life and/or growth of a flower or a plant part in cut state, i.e. in a state in which the stem of the flower or plant part has been cut off and the stem (3) therefore has a cut surface (2) via which a liquid (4) such as water etc. can be absorbed. The method includes applying a membrane (1,8, 11) such that at least a substantial part of the liquid is applied to the stem via said membrane. The membrane (1) may be arranged to be inserted partly into the stem or cut surface. The membrane (8,11) may also be arranged to cover the stem or at least the cut surface, at least partially. The membrane may be applied by dipping (or spraying) at least the cut surface in a liquid membrane substance. The membrane may be tubular (1) and be sealed at both ends, in which case the interposed cavity (6) may be filled with a fertilizing and/or biocidal substance (7). The membrane can be made from a ceramic or a non-woven membrane material, e.g. based on silicone, PDMS, PAN or PSU.

## Description

The invention concerns a method and means for lengthening the durability or for maintaining the life and/or of the growth of a flower or a plant part in cut state, i.e. a state in which the stem of the flower or plant part has been cut off. In the following, a number of times the term "cut flowers" will be used, but it is to be understood that all flowers or plant parts in whatever form in cut off state (from the root, bulb, tuber etc.) will be included within this term "cut flowers". The invention is also not limited to lengthening the durability of (cut) flowers or plant parts but also extends to maintaining the life and/or the growth of such flowers or plant parts, e.g. for the purpose - e.g. in the environment of a greenhouse - of continuing their growth or at any rate their life, but without the need to make use of the flower or plant roots etc. with which the flowers or plant parts are connected under more natural conditions but which are now cut off from them, as is proposed here.

Cut flowers are flowers which may be included in a bouquet or flower arrangement. Cut flowers normally last for a few days to a few weeks. In order to improve the durability, additives, e.g. including fertilizing and/or bactericidal (biocidal) materials are added to the water. In the case of flowers having a weak stem, the stem may be strengthened, e.g. using a wire.

In the Netherlands, there is a significant market for the production of cut flowers, while most flowers are traded via a flower auction.

The aging or wilting of cut flowers can be caused by the fact that they absorb too little or contaminated water and/or nutrients and minerals via the cut stem surface. An important cause of this is biofouling, i.e. the formation of a layer of microorganisms on the surfaces where the nutrients are located. A freshly cut surface of a flower stem in combination with water at room temperature is precisely a typical surface where biofouling can appear rapidly.

The present invention is aimed at creating an improvement in the durability of cut flowers in any stage of the production and/or usage process, i.e. from the moment when the flowers are "harvested" by cutting them off from the rest of the plant. After all, the process of aging or wilting starts at that same moment.

The invention is based on the application of membrane technology which is used, among others, for purifying water but which also has medical applications. In this context, the term 'membrane' refers to materials having (micro)pores that are smaller than bacteria but larger than water molecules (and possible additives) so that the water is admitted to the flower stem but not the bacteria.

According to the invention, preferably, a method is provided for lengthening the durability or for maintaining the life and/or growth of a plant part in cut state, i.e. in a state in which the stem of the flower or the plant part in question has been cut off and the stem therefore has a cut surface via which the cut-off flower can absorb, e.g. a liquid such as water from a reservoir such as a vase, said method preferably including the application of the membrane in such way that a substantial part of the liquid to be absorbed is supplied via the membrane. In this way, at least part of the liquid flowing via the membrane is supplied to the flower (stem) while bacteria etc. are retained by the micro filter formed by the membrane and cannot get access to the stem and/or flower material and damage that.

There is a range of possible preferred embodiments, which will be briefly presented below and in the following in the form of exemplary embodiments that are not restrictive for the scope of protection.

The membrane may, according to one preferred embodiment of the invention, be inserted partially into the stem; the membrane may e.g. be inserted into the stem via the cut surface. In this option, the liquid is guided to the interior of the stem via the part not inserted into the stem and thus extending outside the stem . In this membrane configuration, the membrane can promote the flow (e.g., flow velocity) of the liquid to and through (part of) the stem. In addition, the membrane can mechanically strengthen the stem and thereby fulfill the function of an e.g. metal stiffening wire, which may be used for cut flowers.

According to another preferred embodiment of the invention, the membrane surrounds the stem or at least the cut surface at least partially. For example, the membrane can cover the stem in such way that in operation, e.g. when the flowers are placed in a vase, a liquid surrounding the stem can reach the stem exclusively via the membrane, e.g. by means of a membrane coating over a substantial part of the stem (including the cut surface), so that the liquid can reach the stem exclusively via the coating. In another form, a membrane may be applied primarily on or against the cut surface, which requires less membrane material.

The membrane may, for example, be applied by immersing at least the surface in a liquid membrane substance (e.g. "dip coating") or, as already mentioned above, by spraying at least the cut surface with a sprayable (mist forming) membrane substance.

It is emphasized once more than the invention is not limited to lengthening the durability of (cut) flowers or plant parts but also extends to maintaining the life and/or the growth of such flowers or plant parts, e.g. for the purpose of continuing their growth or at any rate their life , but without their natural root systems (or bulbs, tubers etc.). In this connection, the proposed membranes or membrane-containing components may be viewed as root-replacing elements which can result, e.g. in the production of flowers or plants in greenhouses, in great advantages, due to the fact that the function of the plant roots etc., which after all are intended (as opposed to what is frequently the case in modem greenhouses) to be in contact with ("full") soil under natural conditions, can be taken over by membranes or elements containing membranes, which then can act as artificial roots. Membranes may also, if desired, be used in combination with a (natural) root system, e.g. in the form of a type of infusion which may be applied (or introduced) between the cut surface and the flower or into the stem

In addition - as should be clear - the membrane element may also fulfill the function of an "artificial root" for cut flowers etc. which are part of flower arrangements, or which - quite commonly - are placed in a vase.

In the following, the invention will be explained further with reference to some exemplary embodiments which schematically are shown in:
- Figure 1: in which an exemplary embodiment is shown of a membrane inserted into the cut surface;
- Figure 2: in which an exemplary embodiment is shown of a membrane that is applied around a part of the stem
- Figure 3: in which an exemplary embodiment is shown of a membrane applied essentially at the site of the cut surface.

All exemplary embodiments shown and discussed in the following are highly suitable for realizing the method according to the invention.

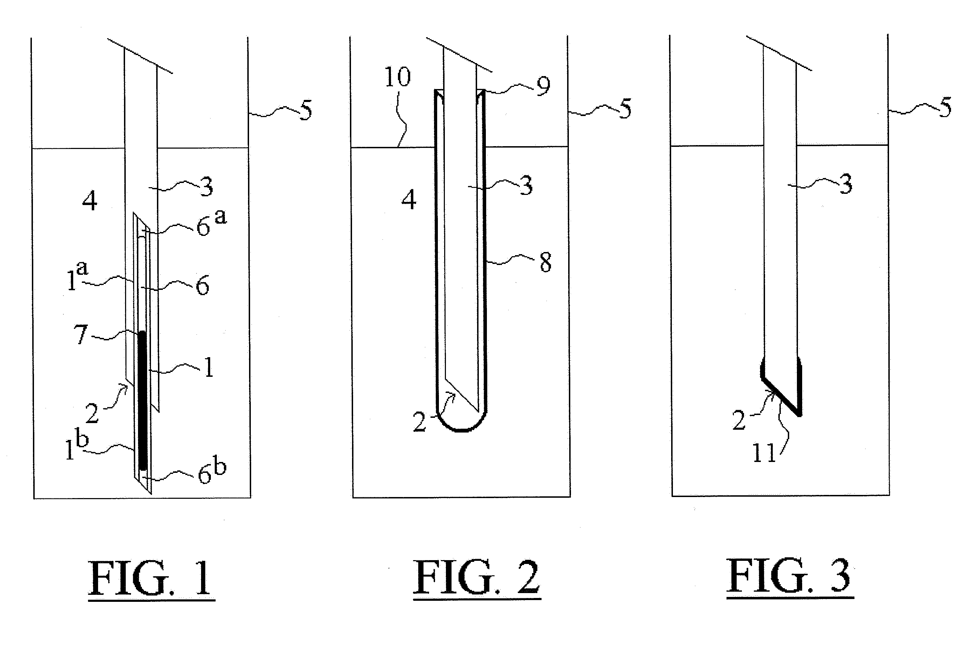

Figure 1 shows a membrane 1 in an embodiment suitable for being placed on the cut surface of a stem 3. The membrane 1 could be a rod-shaped membrane that is suitable in shape and material - e.g. ceramic (Al₂O₃) -- and dimensions for being inserted into the stem 3 or, as shown in the figure, in the cut surface 2. From the membrane 1, a part 1a extends into the stem 3 while a part 1b extends outside it and may be in contact with liquid 4 (normally mainly water) in a container 5 (e.g., a vase, shown schematically). Via the very narrow (micro)pores of the membrane, the liquid 4 can, and any bacteria etc. cannot, enter into the interior of the membrane 1 and therefore to the interior of the stem. As a result of the thus-obtained clean supply of liquid to the stem 3 it may be expected that the durability of the flower(s) (not shown) connected to the stem 3 and of any leaves will be lengthened.

Preferably, as Figure 1 shows, instead of a solid rod-shaped membrane, use is made of a tubular membrane, e.g. also of ceramic material, which is arranged to be inserted into the stem or in the cut surface, said tubular membrane being sealed, at least at one end. The transport of liquid is facilitated and thereby promoted by a cavity 6 present as a result of the tubular shape. The bottom side or top side of the tubular membrane should be closed in order to prevent (possibly bacterially contaminated) liquid from getting access to the stem via the ends, which could seriously impair the purifying effect of the membrane. The material used to seal the tubular membrane 1, like the material of the tubular membrane 1 itself, is preferably a material with microporous properties so that only the liquid 4 can enter via the pores.

The tubular membrane shown in Figure 1 is even sealed at both ends. The hollow part between them may be at least partially field with a quantity of e.g. a fertilizing and/or bactericidal substance 7 which can go into solution in the liquid flow and thus be supplied to the stem 3, the flower (not shown) and/or the leaves.

Figure 2 shows an exemplary embodiment of a membrane applied around a part of the stem, where a substantial part of the stem and the entire cut surface has been surrounded by a more or less sack-shaped foil or coating 8 which is fabricated either separately from the stem 3 and the cut surface 2, or applied directly - e.g. by spraying or immersing a substantial part of the stem - to the stem 3. For example, the membrane material in this case is a (preferably hydrophilic) non-woven membrane material based on, e.g. a (co)polymer suitable for this purpose, e.g. silicone (polysiloxane), PDMS (polydimethylsiloxane), PAN (polyacrylonitrile), or PSU (polysulfone).

In the embodiment shown in Figure 2, it will, during practical use, be necessary for the upper edge 9 of the membrane sack 8 to be positioned above the liquid level 10 in order to assure that the liquid 4 can access the stem and - in particular - the cut surface 2 exclusively via the membrane sack 8. If, as stated in the lines above, the membrane 8 is obtained by immersion or spraying of the bottom part of the stem 3 including the cut surface 2, it will not be necessary, or at least less necessary for the upper edge 9 of the membrane 8 to extend above the liquid level 10, for it may be assumed that the liquid 4 may not be able to reach the cut surface 2 between the inner side of the membrane 8 and the outer side of the stem 3, as the membrane layer 8 is then always applied directly, e.g. by immersion or spraying, to the surface of the stem 3.

Finally, Figure 3 shows an exemplary embodiment where a membrane 11 is applied essentially at the site of the cut surface. In this case the membrane 11 can also be produced by e.g. immersing the bottom end of the stem 3, especially the cut surface 2, in a membrane substance. Such a membrane substance may, as stated above, be based on one of the above-named (co)polymers.

## Claims

1. Method for lengthening the durability or for maintaining the life and/or the growth of a flower or a plant part in cut state, i.e. in a state in which the relevant stem of the flower or the plant part has been cut off and the stem (3) therefore has a cut surface (2) via which liquid (4) like water etc. can be absorbed,
the method comprising applying a membrane (1,8, 11) in such way that at least a substantial part of the liquid to be absorbed is supplied to the stem via that membrane..

2. Method according to claim 1, in which the membrane (1) is arranged to be inserted partly into the stem.

3. Method according to claim 2, in which the membrane is arranged to be inserted into the cut surface of the stem.

4. Method according to claim 1, in which the membrane (8, 11) is arranged to cover the stem or at least the cut surface, at least partially.

5. Method according to claim 4, in which the membrane (8) surrounds the stem in such way that in operation a liquid surrounding the stem can reach the stem exclusively via the membrane.

6. Method according to claim 4, in which the membrane (11) is applied essentially on or against the cut surface.

7. Method according to one of claims 4 - 6, wherein the membrane is applied by immersion of at least the cut surface in a liquid membrane substance.

8. Method according to one of claims 4-6, wherein the membrane is applied by spraying at least the cut surface with a sprayable membrane substance.

9. Device for performing a method according to one of the foregoing claims.

10. Device according to claim 9, comprising a rod-shaped membrane arranged to be inserted into the stem or in the cut surface.

11. Device according to claim 9, comprising a tubular membrane arranged to be inserted into the stem or in the cut surface, said tubular membrane being sealed, at least at one end.

12. Device according to claim 11, comprising a tubular membrane (1) arranged to be inserted into the stem (3) or in the cut surface (2), said tubular membrane being sealed at both ends and whose interposed cavity (6) is, at least partially, filled with e.g. a fertilizing and/or bactericidal substance (7).

13. Device according to claim 9, comprising a membrane (8) which encloses the stem and/or the cut surface at least partially.

14. Device according to claim 9, comprising a membrane of a non-woven membrane material.

15. Device according to claim 9, comprising a membrane of a ceramic membrane material, e.g. Al₂O₃.

16. Device according to claim 9, comprising a membrane based on a silicone (polysiloxane).

17. Device according to claim 9, comprising a membrane based on PDMS (polydimethylsiloxane).

18. Device according to claim 9, comprising a membrane based on PAN (polyacrylonitrile).

19. Device according to claim 9, comprising a membrane based on PSU (polysulfone).
